# EUROPEAN PATENT APPLICATION

(11) **EP 4 837 941 A1**
(43) Date of publication of application: **11.11.2026**
(21) Application number: 26175487.3
(22) Date of filing: 29.04.2026
(51) Int. Cl.: C09J 109/02, C08L 9/02, C09J 7/38

(54) **NITRILE-BASED PRESSURE SENSITIVE ADHESIVES (PSAS) FROM HIGH ACRYLONITRILE (ACN) CONTENT ACRYLONITRILE BUTADIENE RUBBERS (NBRS)**

(30) Priority: 05.05.2025 US 202563800072 P; 23.04.2026 US 202619656832
(71) Applicant: Carlisle Construction Materials, LLC, Carlisle, PA 17013 (US)
(72) Inventor: ZHANG, Jilin, York, 17403 (US); SCANISH, Michael, Camp Hill, 17011 (US)
(74) Representative: Mewburn Ellis LLP

(57) **Abstract**

A Pressure Sensitive Adhesive (PSA) including: (a) a high acrylonitrile (ACN) content butadiene rubber; (b) a medium acrylonitrile (ACN) content butadiene rubber; (c) a plasticizer; and (d) a tackifier resin, wherein the combination of high and medium acrylonitrile (ACN) content butadiene rubbers results in the acrylonitrile content of the solid acrylonitrile rubbers of 30 wt% or more.

## Description

### Related Application:

The present application claims priority to U.S. Provisional Patent Application Serial No. 63/800,072, of same title, filed May 5, 2025, the entire disclosure of which is incorporated herein by reference in its entirety for all purposes.

### Technical Field:

The present invention relates to Pressure Sensitive Adhesives.

### Background of the Invention:

Existing Pressure Sensitive Adhesives (PSAs) have little to no nitrile in them. Increased amounts of nitrile in PSAs have the positive beneficial effect of increasing their chemical resistance. This is especially desirable when oils or greases are present on surfaces on which the PSA is to be applied. Unfortunately, simply increasing the amount/concentration of nitrile in the PSA may not be acceptable due to excellent chemical resistance of nitrile, which can dramatically compromise plasticizer and tackifier effect, and even causes phase separation to the PSA. Therefore, directly formulating high nitrile content Nitrile Butadiene Rubbers (NBRs) in a PSA could cause poor adhesion (*e.g.,* not tacky or low peel strength), poor cohesion (*e.g.,* low static shear), and low heat resistance (*e.g*., shear adhesion failure temperature (SAFT)), which makes it ineffective for use.

It would instead be desirable to increase the nitrile content in the PSA to increase its chemical resistance, but without compromising its adhesive properties (*e.g*.: providing balanced adhesion, cohesion, and heat resistance). Unfortunately, to date, a solution to the problem of increasing the desired nitrile concentration in PSAs has not been found.

### Summary of the Invention:

The present invention provides a Pressure Sensitive Adhesive having a nitrile content of 30% or greater by weight in solid acrylonitrile butadiene rubber(s). The advantage of the present PSA is that it has increased chemical resistance without exhibiting reduced adhesive properties.

In accordance with the present system, a combination of high and medium concentration acrylonitrile butadiene rubbers are mixed together with a plasticizer and a tackifier to form a PSA. The present inventors have experimentally determined that this combination of high and medium concentration acrylonitrile butadiene rubbers results in PSAs with customized adhesion properties. Having >30% ACN content in solid NBRs enhances the PSA's chemical resistance.

As understood herein, a "high" ACN content is a nitrile content above 30% by weight. In various experimentally tested embodiments, the high ACN content was 41%. As also understood herein, a "medium" ACN content is a nitrile content of 10% to 30% by weight. In various experimentally tested embodiments, the medium ACN content was 30%.

### Detailed Description of the Invention:

Table 1 below shows the experimental results of the Applicant's mixing of High ACN NBR and Medium ACN NBR, plasticizer and tackifier to form a Pressure Sensitive Adhesive (PSA) as compared with a commercial styrene block copolymer PSA (Example #1), High ACN NBR only PSAs (Examples #2 and #3), Medium ACN NBR only PSA (Example #4).

Table 1 shows some significant and non-obvious characteristics of various mixtures of the present compounds to achieve desired properties. The examples in Table 1 each show a different mixture, prepared as follows. All of these nitrile PSA examples were compounded by mixing target amounts of NBR rubber(s), liquid plasticizer, and tackifier resin into acetone and dissolved overnight on a can roller to achieve solids of 30% clear solutions. The compounded PSAs were hand drawdown on an EPDM (ethylene propylene diene terpolymer) membrane and dried in 60 °C oven for 10 minutes to achieve 3 mil PSA thickness. The dried PSAs were then laminated to silicone coated polyester release liner for further testing.

In Example #1, a commercial styrene block copolymer hotmelt PSA, is employed as benchmark to compare adhesion properties. This PSA (10 mil thickness) shows balanced adhesion, cohesion, and heat resistance, with peel force of 3.1 lbf/inch from plywood, static shear of over 72 hours, and SAFT of 66°C.

In Examples #2 and #3, samples (labelled Nitrile PSA #9 and #10) were formulated. 30%-40% of the composition was High ACN NBR (*i.e.:* 41% ACN). No Medium ACN NBR (*i.e.,* 30% ACN) was added. As such, the average ACN content equals to High ACN NBR, 41%. As can be seen, the PSA showed poor adhesion, cohesion and heat resistance because the High ACN NBR has too strong chemical resistance to the plasticizer and tackifier. The peel strength is only 0.6-1.2 lbf/inch, the static shear is less than 24 hours, and the SAFT is 13- 22°C.

Example #4, a sample (labelled Nitrile PSA #12) was prepared. In this formulation, 40% of the composition was Medium ACN NBR. No High ACN NBR was added. As such, the average ACN content equals Medium ACN NBR, 30%. As can be seen, the PSA showed strong adhesion but poor cohesion and heat resistance because Medium ACN NBR can be plasticized and tackified easily in comparison of High ACN NBR. The peel strength from plywood is high, 6.7 lbf/inch. However, the static shear is 10 hours, and the SAFT is around 40°C.

Examples #5, #6 and #7 were formulated by High ACN NBR mixed with Medium ACN NBR (labelled sample PSA #12-6, #12-7, #12-9). These samples used 10-20% High ACN NBR and 20-30% Medium ACN NBR. As can be seen, the PSAs showed excellent adhesion, poor static shear and heat resistance. The peel strength was over 7 lbf/inch from plywood. The static shear was 19-39 hours, and the SAFT was below 45 °C. These examples showed that combination of the High ACN NBR and Medium ACN NBR can achieve similar adhesion properties as Example #4 using Medium ACN NBR only but have higher average ACN% in solid NBRs.

In Example #8, a sample (labelled Nitrile PSA #12-8) was prepared. In this formulation, 30% High ACN NBR mixing with 10% Medium ACN NBR provided high average ACN content in NBRs. However, the plasticizer and tackifier effects were compromised, leading to medium adhesion but poor cohesion and heat resistance. The peel strength was 3.4 lbf/inch from plywood, the static shear was near to 24 hours, and the SAFT was around 46 °C.

Examples #9 - #13 were formulated by High ACN NBR mixed with Medium ACN NBR (labelled sample PSA D4, D5, E2, G1 and G4). These samples used 5-20% High ACN NBR and 32.5-52.5% Medium ACN NBR to balance adhesion, cohesion and heat resistance. As can be seen, the PSAs showed balance adhesion, cohesion and heat resistance in comparison of Example #1, a commercial styrene block copolymer PSA. The peel strength was 3.1-5.6 lbf/inch from plywood, equal to or higher than 3.1 lbf/inch from example #1. The static shear was close to Example #1, over 72 hours. The SAFT was 61-77 °C compared with 66°C from Example #1. In addition, all these examples provide higher average ACN% in solid NBRs than Example #4, suggesting better chemical resistance. Therefore, it can clearly be seen in Examples #9 to #13 that nitrile PSAs formulated by mixing High ACN NBR and Medium ACN NBR are successful. In particular, the Examples #9-#13 showed balanced adhesion, cohesion, and heat resistance properties compared with commercial styrene block copolymer PSA product.

In accordance with the present system, different forms of plasticizers may be used. A liquid NBR was used in the Examples presented herein, but the present system is not limited to this particular plasticizer.

**Table 1: Selected nitrile PSA formulations with calculated average ACN content from NBRs and adhesion performance.**

| **PSA Samples** | **Example #1 (control)** | **Example #2** | **Example #3** | **Example #4** | **Example #5** | **Examp le #6** | **Example #7** | **Example #8** | **Example #9** |
|---|---|---|---|---|---|---|---|---|---|
| | **Styrene block copolym er PSA** | **Nitrile PSA #9** | **Nitrile PSA #10** | **Nitrile PSA #12** | **Nitrile PSA #12-6** | **Nitrile PSA #12-7** | **Nitrile PSA #12-9** | **Nitrile PSA #12-8** | **Nitrile PSA D4** |
| **High ACN NBR (41% ACN, solid)** | N/A | 30% | 40% | 0% | 10.0% | 20.0% | 20.0% | 30.0% | 10.0% |
| **Medium ACN NBR (30% ACN, solid)** | | 0% | 0% | 40.0% | 30.0% | 20.0% | 20.0% | 10.0% | 40.0% |
| **Liquid Plasticizer** | | 30% | 30% | 30.0% | 35.0% | 35.0% | 30.0% | 35.0% | 25.0% |
| **Tackifier Resin (softening point 90 °C)** | | 40% | 30% | 30.0% | 25.0% | 25.0% | 30.0% | 25.0% | 25.0% |
| **Average ACN% in Solid NBR(s)** | N/A | 41% | 41% | 30% | 33% | 36% | 36% | 38% | 32% |
| **90° peel from plywood (lbf/inch, n=3)** | 3.1 | 0.6 | 1.2 | 6.7 | 7.0 | 7.7 | 7.4 | 3.4 | 5.6 |
| **SAFT (°C, n=3)** | 66.4 | 22.1 | 13.3 | 39.6 | 44.3 | 33.0 | 3.3 | 46.4 | 76.7 |
| **Static Shear (n=3, hrs, 1"x1"x 500 g)** | >72 | 23.8 | 1 | 10.4 | 20 | 18.8 | 39.3 | 23.8 | >72 |

**Table 1: (Continued)**

| **PSA Samples** | **Example #10** | **Example #11** | **Example #12** | **Example #13** |
|---|---|---|---|---|
| | **Nitrile PSA D5** | **Nitrile PSA E2** | **Nitrile PSA G1** | **Nitrile PSA G4** |
| **High ACN NBR (41% ACN, solid)** | 10.0% | 20.0% | 10.0% | 5.0% |
| **Medium ACN NBR (30% ACN, solid)** | 37.5% | 32.5% | 47.5% | 52.5% |
| **Liquid Plasticizer** | 27.5% | 27.5% | 17.5% | 17.5% |
| **Tackifier Resin (softening point 90 °C)** | 25.0% | 20.0% | 25.0% | 25.0% |
| **Average ACN% in Solid NBR(s)** | 32% | 34% | 32% | 31% |
| **90° peel from plywood (lbf/inch, n=3)** | 4.1 | 3.1 | 3.4 | 4.3 |
| **SAFT (°C, n=3)** | 63.3 | 61.2 | 70.5 | 69.0 |
| **Static Shear (n=3, hrs, 1"x1"x 500 g)** | >72 | >72 | >72 | >72 |

In accordance with the present system, different PSA characteristics may be desired in different situations. Peel adhesion, usually measured in 90° or 180°, is the primary parameter to a PSA, determining how well a PSA sticks to a substrate. It can be impacted by PSA and substrate chemistry, PSA properties, dwell time, application pressure, substrate texture, cleanliness, and treatment, etc. High peel adhesion is desired for permeant bonding purpose, while low peel is typically designed for temporary bonding or removable applications.

Static shear is a critical parameter to a PSA to determine cohesive strength. It measures PSA's ability to resist creep or slippage under an external force. A PSA with low static shear may have poor peel issue due to cohesive failure, adhesive residue after removal, heavy cold flow issues, etc. High static shear PSA is typically desired, especially for long term holding applications, but tack and peel usually are compromised.

Shear adhesion failure temperature (SAFT) is another critical parameter to a PSA, determining the highest temperature a PSA can withstand in applications. A PSA with low SAFT suggests poor heat tolerance, indicating easily to fail in hot environment or weather.

Table 2 lists typical 90 ° peel, static shear, and SAFT range for rubber PSAs. For example, peel adhesion ranged from weak (<2 lbf/inch), to medium (3-5 lbf/inch), to high (> 5 lbf/inch), static shear ranged from weak (<24 hours), to medium (24-72 hours), to high (>72 hours), and SAFT ranged from low (<50 °C), to medium (50-70 °C), to high (> 70 °C). Different performance PSAs can be used for different applications, including APEEL tape, self-adhering technology (SAT) membranes, construction tapes, self-adhering wood floor, etc. Depending on application requirements, PSAs with target performance should be designed and formulated.

**Table 2. Typical 90° peel, static shear, and SAFT range for rubber PSAs.**

| | 90° Peel (lbf/inch) | Static shear (hours) | SAFT (°C) |
|---|---|---|---|
| Low | <2 | <24 | <50 |
| Medium | 2-5 | 24-72 | 50-70 |
| High | >5 | >72 | >70 |

Nitrile PSAs #9 (Example #2) and #10 (Example #3) formulated directly by High ACN NBR (41% ACN content) showed poor peel: 0.6 lbf/inch and 1.2 lbf/inch, poor static shear: <24 hours, and poor SAFT: <50 °C. This could be due to strong chemical resistance property of high ACN NBR added to the plasticizer and tackifier. The plasticizer and tackifier effects are limited.

Nitrile PSAs formulated by High ACN NBR mixed with Medium ACN NBR can achieve different adhesive performance. For example, Nitrile PSAs #12-6 (Example #5), #12-7 (Example #6), and #12-9 (Example #7) contain 33-38% ACN in solid NBRs, which are higher than nitrile PSA #12 (Example #4) containing 30% ACN in solid NBRs. As can be seen, these three nitrile PSAs showed high peel, poor static shear and poor heat resistance. The peel strength is over 7 lbf/inch from plywood. The static shear is 19-39 hours, and the SAFT is below 45 °C. These nitrile PSAs may be suitable for low temperature applications.

In accordance with the present system, Nitrile PSAs #D4 (Example #9), #D5 (Example #10), #E2 (Example #11), #G1 (Example #12) and #G4 (Example #13) contain 31-34% ACN in solid NBRs, which are higher than nitrile PSA #12 (Example #4) containing 30% ACN in solid NBRs. As can be seen, these five nitrile PSAs showed balanced adhesion, cohesion, heat resistance, and medium to high peel strength: 3.1-5.6 lbf/inch, with high static shear: >72 hours and medium to high SAFT: 61-77 °C.

Table 3 below shows rheological results of the example PSAs listed in Table 1. For nitrile PSAs, the glass transition temperature (Tg) ranges from -24°C to -10°C, and the storage modulus (G') ranges from 3.3×10^4 to 1.4×10^5 Pa at 25 °C, within 2×10^4 to 2×10^5 Pa application range at room temperature (see Class J., Chu S., J. Appl. Pol. Sci., 1985, 30, 805.)

**Table 3: Rheological results of example PSAs listed in Table 1.**

| **PSA Samples** | **Example #1 (control)** | **Example #2** | **Example #3** | **Example #4** | **Example #5** | **Example #6** | **Example #7** | **Example #8** | **Example #9** |
|---|---|---|---|---|---|---|---|---|---|
| | **Styrene block copolym er PSA** | **Nitrile PSA #9** | **Nitrile PSA #10** | **Nitrile PSA #12** | **Nitrile PSA #12-6** | **Nitrile PSA #12-7** | **Nitrile PSA #12-9** | **Nitrile PSA #12-8** | **Nitrile PSA D4** |
| **High ACN NBR (41% ACN, solid)** | N/A | 30% | 40% | 0% | 10.0% | 20.0% | 20.0% | 30.0% | 10.0% |
| **Medium ACN NBR (30% ACN, solid)** | | 0% | 0% | 40.0% | 30.0% | 20.0% | 20.0% | 10.0% | 40.0% |
| **Liquid Plasticizer** | | 30% | 30% | 30.0% | 35.0% | 35.0% | 30.0% | 35.0% | 25.0% |
| **Tackifier Resin (softening point 90 °C)** | | 40% | 30% | 30.0% | 25.0% | 25.0% | 30.0% | 25.0% | 25.0% |
| **Average ACN% in Solid NBR(s)** | N/A | 41% | 41% | 30% | 33% | 36% | 36% | 38% | 32% |
| **Tg (°C)** | -20 | -12 | -10 | -17 | -22 | -20 | -18 | -17 | -22 |
| **G'@25°C (Pa, 1 rad/s)** | 5.8 x 10⁴ | 1.2 x 10⁵ | 5.9 x 10⁴ | 5.9 x 10⁴ | 4.2 x 10⁴ | 3.3 x 10⁴ | 3.7 x 10⁴ | 3.9 x 10⁴ | 8.4 x 10⁴ |
| **G"@25°C (Pa, 1 rad/s)** | 3.0 x 10⁴ | 8.3 x 10⁴ | 3.1 x 10⁴ | 3.0 x 10⁴ | 2.6 x 10⁴ | 2.1 x 10⁴ | 2.2 x 10⁴ | 2.5 x 10⁴ | 4.2 x 10⁴ |
| **tanδ@25°C (1 rad/s)** | 0.51 | 0.68 | 0.52 | 0.51 | 0.62 | 0.64 | 0.58 | 0.64 | 0.50 |

**Table 3. (Continued)**

| **PSA Samples** | **Example #10** | **Example #10** | **Example #11** | **Example #12** | **Example #13** |
|---|---|---|---|---|---|
| | **Nitrile PSA D5** | **Nitrile PSA D5** | **Nitrile PSA E2** | **Nitrile PSA G1** | **Nitrile PSA G4** |
| **High ACN NBR (41% ACN, solid)** | 10.0% | 10.0% | 20.0% | 10.0% | 5.0% |
| **Medium ACN NBR (30% ACN, solid)** | 37.5% | 37.5% | 32.5% | 47.5% | 52.5% |
| **Liquid Plasticizer** | 27.5% | 27.5% | 27.5% | 17.5% | 17.5% |
| **Tackifier Resin (softening point 90 °C)** | 25.0% | 25.0% | 20.0% | 25.0% | 25.0% |
| **Average ACN% in Solid NBR(s)** | 32% | 32% | 34% | 32% | 31% |
| **Tg (°C)** | -22 | -22 | -19 | -17 | -24 |
| **G'@25°C (Pa, 1 rad/s)** | 7.3 x 10⁴ | 7.3 x 10⁴ | 1.2 x 10⁵ | 1.4 x 10⁵ | 1.1 x 10⁵ |
| **G"@25°C (Pa, 1 rad/s)** | 3.8 x 10⁴ | 3.8 x 10⁴ | 5.7 x 10⁴ | 5.8 x 10⁴ | 5.4 x 10⁴ |
| **tanδ@25°C (1 rad/s)** | 0.52 | 0.52 | 0.46 | 0.43 | 0.47 |

## Claims

1. A Pressure Sensitive Adhesive (PSA) comprising:
a high acrylonitrile (ACN) content butadiene rubber;
a medium acrylonitrile (ACN) content butadiene rubber;
at least one plasticizer; and
at least one tackifier resin,
wherein the combination of high and medium acrylonitrile (ACN) content butadiene rubbers results in the acrylonitrile content of the solid acrylonitrile rubbers being 30 wt% or more.

2. The PSA of claim 1, wherein the high acrylonitrile (ACN) content butadiene rubber is over 30% ACN content by weight.

3. The PSA of claim 1, wherein the medium acrylonitrile (ACN) content butadiene rubber is 10-30% ACN content by weight.

4. The PSA of claim 1, wherein the plasticizer is at least 17.5% by weight of the PSA.

5. The PSA of claim 1, wherein the tackifier is at least 20% ACN by weight.

6. The PSA of claim 1, wherein the concentration of high acrylonitrile (ACN) content butadiene rubber is between 5% and 30% of the weight of the PSA.

7. The PSA of claim 1, wherein the concentration of medium acrylonitrile (ACN) content butadiene rubber is between 10% and 52.5% of the weight of the PSA.

8. The PSA of claim 1, wherein the PSA has a 90 degree Peel from Plywood of 1-8 lbf/in.

9. The PSA of claim 1, wherein the PSA has a static shear of at least 3 hours, 1" by 1" x 500g.

10. The PSA of claim 1, wherein the PSA has SAFT of 0 - 80 °C.
